# EUROPÄISCHE PATENTSCHRIFT

(11) **EP 1 696 533 B1**
(45) Veröffentlichungstag und Bekanntmachung des Hinweises auf die Patenterteilung: **17.06.2009**
(21) Anmeldenummer: 06100273.9
(22) Anmeldetag: 12.01.2006
(51) Int. Cl.: H02J 7/34

(54) **Energieversorgung mit Doppelschichtkondensator**
Electrical power supply with double layer capacitor
Alimentation électrique avec un condensateur électrique à double couche

(30) Priorität: 25.02.2005 DE 102005008719
(43) Veröffentlichungstag der Anmeldung: 30.08.2006
(73) Patentinhaber: ROBERT BOSCH GMBH, 70442 Stuttgart (DE)
(72) Erfinder: Beck, Markus, 71711, Steinheim (DE); Rieker, Joachim, 71711, Kleinbottwar (DE); Lang, Uwe, 71672, Marbach (DE)

(56) Entgegenhaltungen:
- EP-B- 1 360 090
- DE-A1- 19 855 245
- US-A- 3 854 082
- US-A- 4 092 580
- US-A1- 2001 028 571

## Beschreibung

### Stand der Technik

Die Erfindung betrifft ein Energieversorgungssystem nach dem Oberbegriff des Anspruchs 1. Ein derartiges Energieversorgungssystem eignet sich insbesondere für einen Einsatz in dem Bordnetz eines Kraftfahrzeugs. Für sicherheitsrelevante elektrische Verbraucher, die z.B. im Zusammenhang mit einem so genannten "By-Wire-System" (Steer-by-Wire; Break-by-Wire) in einem Kraftfahrzeug betrieben werden, ist es in der Regel erforderlich, eine redundante Energieversorgung mit einem zusätzlichen Energiespeicher vorzuhalten, um die Verfügbarkeit und Spannungsstabilität des Systems auch bei einem Ausfall einer herkömmlichen Fahrzeugbatterie zu gewährleisten. Als zusätzliche Energiespeicher sind bereits Batterien bekannt, die die Fahrzeugbatterie unterstützen oder diese bei einem Totalausfall ersetzen. Die Erfindung schlägt die Verwendung eines Doppelschichtkondensators als zusätzlichen Energiespeicher vor.

Aus DE 199 03 427 A1 ist eine Einrichtung zur Ladung eines Kondensators bekannt, insbesondere eines Kondensators oder eines Kondensatorzwischenspeichers bei einer Generatoranordnung in einem Fahrzeugbordnetz, in dem der Kondensator mit einem von einer Spannungsquelle, insbesondere vom Generator versorgten Gleichspannungswandler in Verbindung steht. Der Kondensator ist dabei direkt mit dem Gleichspannungswandler verbunden, wobei dieser so geregelt ist dass er dem Kondensator einen zeitlich konstanten Strom oder eine zeitlich konstante Leistung zuführt. Es ist auch schon eine Schaltungsanordnung für die Ladung bzw. Entladung eines Energiespeichers in Gestalt eines Kondensators bekannt, bei der in dem Ladezweig eine Glühlampe und eine Diode und in dem Entladezweig eine Diode angeordnet sind. Nachteilig bei dieser Schaltungsanordnung ist der durch jede Diode verursachte Spannungsabfall von etwa 0,6 Volt. Weiterhin ist zwar durch die Glühlampe auf kostengünstige Weise eine Strombegrenzung möglich. Diese ist jedoch nicht konstant, sondern hängt von der Spannungsdifferenz zwischen dem Ladekreis und dem Energiespeicher ab.

Aus der EP-B-1360090 ist ein Kraftfahrzeug-Bordnetz bekannt mit einem Doppelschichtkondensator, um insbesondere die beim Boosten oder Rekuperieren umgesetzten Energien zu speichern und abgeben zu können. Um einen kostenintensiven, bidirektionalen Gleichspannungswandler zu ersetzen, sind zwei bzw. vier gesteuerte Schalter vorgesehen.

### Vorteile der Erfindung

Die Erfindung bietet insbesondere den Vorteil, dass der Ladezustand des Energiespeichers unter allen Betriebsbedingungen ausreichend hoch ist, um die sicherheitsrelevanten Verbraucher versorgen zu können. Hierzu erfolgt ein stetiges Nachladen des Energiespeichers durch das Energieversorgungssystem, wobei ein Entladen des Energiespeichers durch das Energieversorgungssystem zuverlässig verhindert wird. Spannungseinbrüche beim Laden bzw. Zuschalten des Energiespeichers an das Energieversorgungssystem sind auf ein tolerables Maß herabgesetzt. Dazu wird der Ladestrom für den Energiespeicher vorteilhaft begrenzt. Im Bedarfsfall einer Aktivierung des sicherheitsrelevanten Verbrauchers bei einer Versorgungsschwäche des Energieversorgungssystems, wird der Energiespeicher so schnell wie möglich dem Verbraucher zur Verfügung gestellt. Die Ladefunktion über das Energieversorgungssystem und auch das schnelle Versorgen eines relevanten Verbrauchers werden vorteilhaft durch ein Steuergerät aktiviert. Vorteilhaft ist das Energieversorgungssystem in zwei Teilsysteme unterteilt, wobei das erste Teilsystem den Energiespeicher ständig lädt und das zweite Teilsystem bei Ausfall des ersten Teilsystems von dem Energiespeicher mit Energie versorgt wird. Besonders vorteilhaft ist das Energieversorgungssystem in einem Bordnetz eines Kraftfahrzeugs einsetzbar, da hierdurch eine große Versorgungssicherheit für sicherheitsrelevante Systeme des Kraftfahrzeugs erreichbar ist. Für die Steuerung des Lade- bzw. Entladevorgangs des Energiespeichers ist vorteilhaft ein Funktionsmodul vorgesehen, das einen Mikrorechner, eine Pufferschaltung, eine Logikschaltung eine Treiberschaltung, ein Schaltmodul, sowie eine Spannungsversorgungseinrichtung umfasst. Um die Verlustleistung möglichst gering zu halten, sind für die Ladung des Energiespeichers vorteilhaft zwei unterschiedliche, alternativ schaltbare Ladezweige vorgesehen, deren jeweilige Aktivierung von der Spannungsdifferenz zwischen der Spannung des Bordnetzes und der Spannung an dem Energiespeicher abhängt. In dem ersten, für niedrige Spannungsdifferenz ausgelegten Ladezweig sind Halbleiterschaltmittel, wie insbesondere MOSFET-Transistoren vorgesehen. Der zweite, für höhere Spannungsdifferenz ausgelegte Ladezweig umfasst eine so genannte Lampenschaltung. Weitere Vorteile ergeben sich aus den Unteransprüchen und der Beschreibung.

### Zeichnung

Ausführungsbeispiele der Erfindung werden m Folgenden unter Bezug auf die Zeichnung näher erläutert. Dabei zeigt
- Figur 1: ein Blockschaltbild eines Energieversorgungssystems,
- Figur 2: ein weiteres Blockschaltbild eines Energieversorgungssystems,
- Figur 3: ein Schaltbild einer Spannungsversorgungseinrichtung,
- Figur 4: ein Schaltbild einer Pufferschaltung,
- Figur 5: ein Schaltbild einer Pufferschaltung,
- Figur 6: ein Schaltbild einer Ladefreigabeschaltung,
- Figur 7: ein Schaltbild einer Auswahlschaltung,
- Figur 8: ein Schaltbild einer Mosfetschaltung.

### Beschreibung der Ausführungsbeispiele

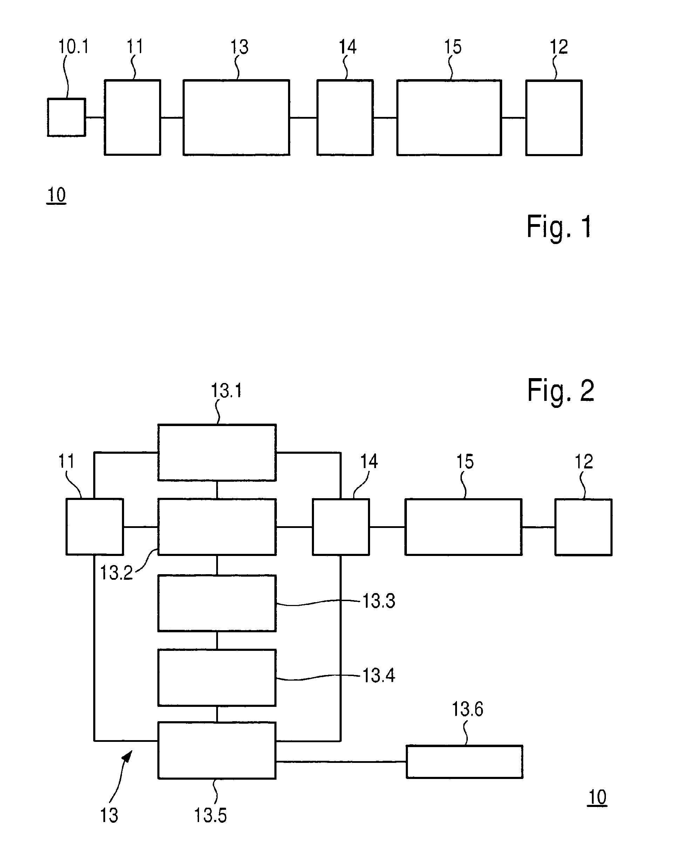

Figur 1 zeigt ein erstes Blockschaltbild eines Energieversorgungssystems 10. Das Energieversorgungssystem 10 umfasst zwei Teilsysteme 11,12 und wenigstens einen zusätzlichen Energiespeicher 14 neben der Batterie 10.1. Die jeweiligen Teilysteme 11,12 sind über jeweils ein Funktionsmodul 13,15 mit dem Energiespeicher 14 verbunden. Über das erste Funktionsmodul wird der Energiespeicher 14 mit dem ersten Teilsystem 11 des Energieversorgungssystems 10 verbunden oder von diesem getrennt. Über das zweite Funktionsmodul 15 wird der Energiespeicher 14 mit dem zweiten Teilsystem 12 des Energieversorgungssystems 10 verbunden oder von diesem getrennt. Die Aufladung des Energiespeichers 14 erfolgt über das Energieversorgungssystem 10, vorzugsweise über das Teilsystem 11 des Energieversorgungssystems. Um bei dem Laden des Energiespeichers 14 einen Einbruch in der Spannung des Energieversorgungssystems 10 zu vermeiden, wird vorzugsweise eine einstellbare Strombegrenzung für den Ladestrom vorgesehen. Im Bedarfsfall kann der Energiespeicher 14 vorteilhaft mit dem ersten Teilsystem 11 und/oder mit dem zweiten Teilsystem 12 des Energieversorgungssystems 10 verbunden werden. Besondere Probleme, die jedoch mit der erfinderischen Lösung beherrschbar sind, ergeben sich bei dem Einsatz eines Doppelschichtkondensators als Energiespeicher 14. Derartige Doppelschichtkondensatoren haben Kapazitätswerte in der Größenordnung einiger hundert Farad und liefern bei Entladung einen Strom in der Größenordnung einiger hundert Ampere.

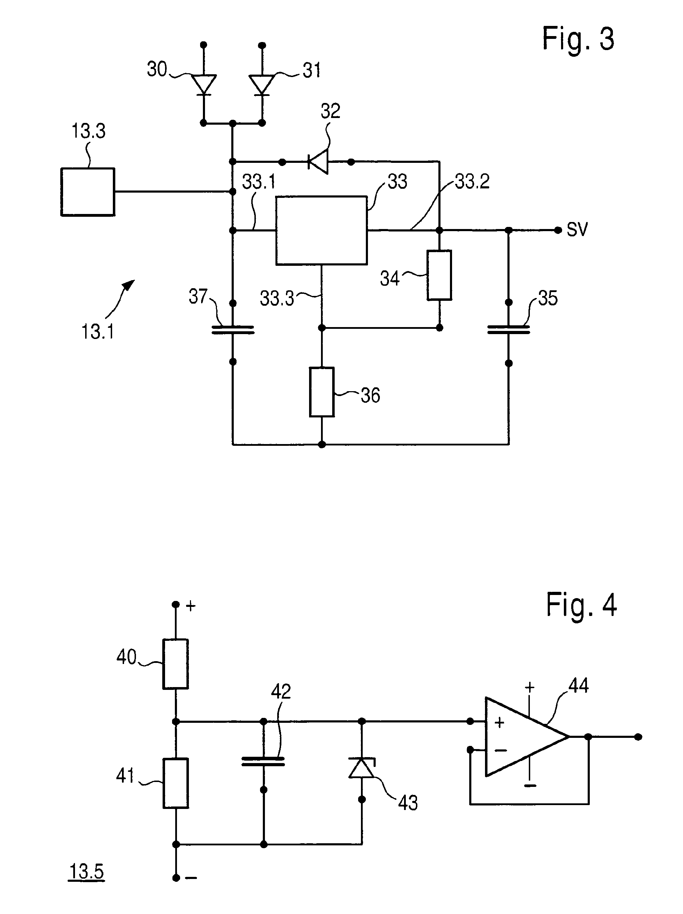

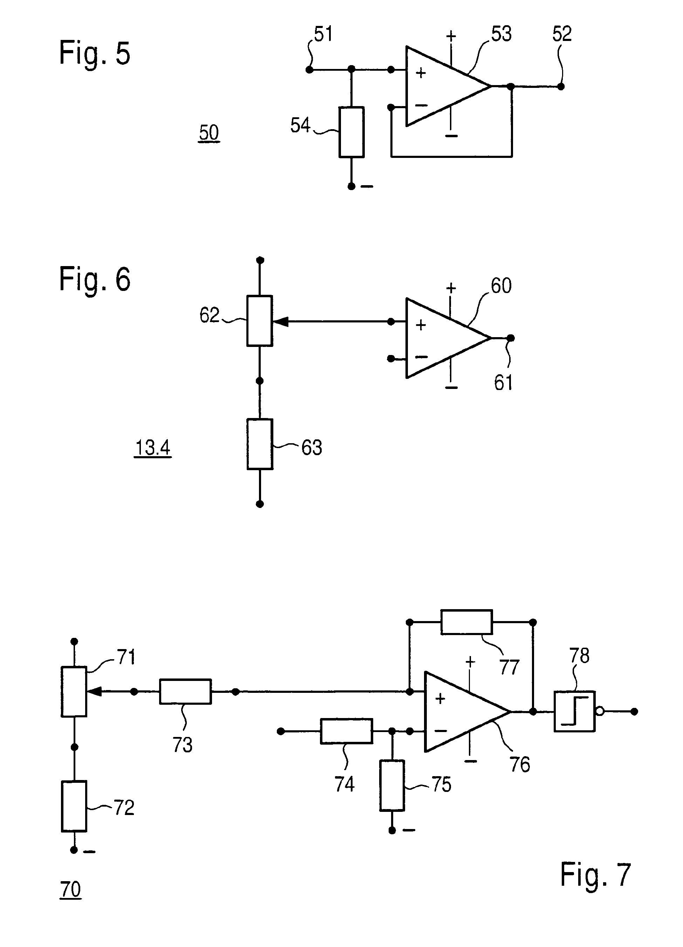

Figur 2 zeigt ein weiteres Blockschaltbild des Energieversorgungssystems 10 mit seinen Teilsystemen 11,12, dem Energiespeicher 14 und den Funktionsmodulen 13 und 15. In Figur 2 sind weitere Einzelheiten des Funktionsmoduls 13 dargestellt. Das Funktionsmodul 13 besteht aus den Funktionsmodulen 13.1,13.2,13.3,13.4,13.5 und 13.6. Das Funktionsmodul 13.6 steuert das Funktionsmodul 13 und umfasst zu diesem Zweck vorteilhaft einen Mikrorechner. Das Funktionsmodul 13.1 dient der Spannungsversorgung aller weiteren Komponenten des Funktionsmoduls 13.Es ist daher einerseits mit dem Teilsystem 11 des Energieversorgungssystems und gleichzeitig auch mit dem Energiespeicher 14 verbunden. Das Funktionsmodul 13.2 ist eine Torschaltung, die vorzugsweise mit Halbleiterschaltern in Gestalt von Mosfet-Transistoren bestückt ist und eine Steuerung des Energiespeichers bei allen Betriebsbedingungen, insbesondere auch bei einem Ausfall des Teilsystems 11 des Energieversorgungssystems 10 ermöglicht. Das Funktionsmodul 13.3 ist eine Treiberschaltung für die Steuerung des Funktionsmoduls 13.2. Das Funktionsmodul 13.4 st eine Logikschaltung und das Funktionsmodul 13.5 ist eine Pufferschaltung. Figur 3 zeigt ein Schaltbild einer besonders vorteilhaften Ausführungsvariante des Funktionsmoduls 13.1. Eingangsseitig sind zwei Dioden 30,31 vorgesehen, die kathodenseitig miteinander verbunden sind. Die Anode der ersten Diode 30 ist mit dem Pluspol des Teilsystems 11 verbunden. Die Anode der zweiten Diode 31 ist mit dem Pluspol des Energiespeichers 14 verbunden. Die Kathoden der Dioden 30,31 sind einerseits mit dem Eingangsanschluss 33.1 eines Spannungsreglers 33 und andererseits über einen Kondensator 37 mit dem Masseanschluss verbunden. Der Steuereingang 33.3 des Spannungsreglers 33 ist über einen Widerstand 36 mit dem Masseanschluss verbunden. Der Ausgangsanschluss 33.2 des Spannungsreglers ist über einen Widerstand 34 mit dem Steuereingang 33.3 des Spannungsreglers 33 verbunden. Zwischen den Ausgangsanschluss 33.2 des Spannungsreglers 33 ist ein Kondensator 35 geschaltet. Weiterhin ist noch eine Diode 32 vorgesehen, deren Kathode mit dem Eingangsanschluss 33.1 des Spannungsreglers 33 und deren Anode mit dem Ausgangsanschluss 33.2 des Spannungsreglers 33 verbunden ist. Schließlich ist auch das Funktionsmodul 13.3 mit den Kathoden der Dioden 30,31 verbunden. Das Funktionsmodul 13.4 benötigt eine niedrigere Betriebsspannung von 5 Volt, die an dem Ausgangsanschluss 33.2 des Spannungsreglers 33 bereitgestellt wird. Die genaue Höhe dieser Betriebsspannung ist durch die Größe der Widerstände 34,36 bestimmt. Bei einer Ausgangsspannung von 5 Volt liegt zwischen dem Ausgangsanschluss 33.2 und dem Steuereingang 33.3 des Spannungsreglers 33 etwa eine Spannung von 1,25 Volt an. Die Diode 32 schützt den Spannungsregler 33 vor einer Zerstörung, falls die Ausgangsspannung größer als die Eingangsspannung werden sollte. Das in Figur 4 dargestellte Schaltbild zeigt eine Ausführungsvariante des Funktionsmoduls 13.5. Es handelt sich um eine Pufferschaltung für die Aufbereitung der Spannungen des Teilsystems 11 und des Energiespeichers 14, die entkoppelt und gefiltert werden müssen, ehe sie in dem Funktionsmodul 13.4 weiterverarbeitet werden. Das Funktionsmodul 13.5 umfasst eingangsseitig einen Spannungsteiler mit den Widerständen 40 und 41, der zwischen den positiven Pol und Masse geschaltet ist. Der Abgriff des Spannungsteilers liegt an dem nicht invertierenden Eingangsanschluss eines Operationsverstärkers 44. Der invertierende Eingangsanschluss des Operationsverstärkers 44 ist mit seinem Ausgangsanschluss verbunden. Weiterhin sind zwischen den Abgriff des Spannungsteilers und Masse ein Kondensator 42 und eine Zener-Diode 43 geschaltet. Die Widerstände 40,41 teilen die Bezugsspannung herunter. Durch den Kondensator wird die herunter geteilte Spannung gefiltert. Die Eckfrequenz des durch die genannten Bauelemente gebildeten Tiefpasses liegt vorzugsweise bei etwa 110 Hertz. Die Zener-Diode 43 begrenzt die maximale Eingangsspannung. Der Operationsverstärker 44 dient als Impedanzwandler. Die Versorgungsspannung für den Operationsverstärker 44 wird von dem in Figur 3 dargestellten Spannungsregler 33 bereitgestellt. Auch die mit dem Funktionsmodul 13.6 verbundenen Steuereingänge des Funktionsmoduls 13 sind vorteilhaft mit Pufferschaltungen gepuffert. Ein vorteilhaftes Ausführungsbeispiel einer zweckmäßigen Pufferschaltung 50 ist in Figur 5 dargestellt. Der Eingangsanschluss 51 der Pufferschaltung 50 ist mit dem Funktionsmodul 13.6 verbunden. Der Ausgangsanschluss 52 ist dem Funktionsmodul 13.5 zugeordnet. Die Pufferschaltung 50 umfasst im Wesentlichen einen als Impedanzwandler geschalteten Operationsverstärker 53. Um definierte Schaltzustände zu erzwingen, ist zwischen en Eingangsanschluss 51 und Masse ein Widerstand 54 geschaltet. Das Funktionsmodul 13.4 entscheidet über die Ladefreigabe des Energiespeichers 14. Diese Ladefreigabe wird zweckmäßig nur dann erteilt, wenn die Spannung des Energieversorgungssystems, also die Spannung des Teilsystems 11, größer ist als die Spannung des Energiespeichers 14. Das in Figur 6 dargestellte Schaltbild zeigt ein vorteilhaftes Ausführungsbeispiel für das Funktionsmodul 13.4, das dies ermöglicht. Das Funktionsmodul 13.4 umfasst einen als Komparator geschalteten Operationsverstärker 60. An dem Ausgangsanschluss 61 wird die Entscheidung für die Ladefreigabe bereitgestellt, die dem Funktionsmodul 13.3 (Figur 2) zugeleitet wird. An den invertierenden Eingang des Operationsverstärkers 60 wird die Spannung des Energiespeichers 14 angelegt. Der nicht-invertierende Eingang des Operationsverstärkers 60 ist an einen Abgriff eines Spannungsteilers gelegt, der zwischen den positiven Pol der Spannung des Energieversorgungssystems (Teilsystem 11) und Masse geschaltet ist. Der Spannungsteiler umfasst die Widerstände 62 und 63. Vorteilhaft wird ein Widerstand, hier der Widerstand 62 als Potentiometer ausgebildet und der Abgriff des Spannungsteilers mit dem Schleifkontakt des Potentiometers verbunden. Auf diese Weise kann die Schaltschwelle vorteilhaft feinfühlig eingestellt werden.

Bei einer besonders großen Spannungsdifferenz zwischen dem Bordnetz und dem Energiespeicher 14 ist es wegen der dabei entstehenden hohen Verlustleistung zweckmäßiger den Energiespeicher 14 mit Hilfe einer herkömmlichen Lampenschaltung zu laden. Diese Schaltung wird deshalb als Lampenschaltung bezeichnet, weil eine Strombegrenzung mittels eines Kaltleiters, insbesondere mit einer Glühlampe, erreicht wird. In Figur 7 ist eine Schaltungsanordnung 70 dargestellt, die diesen alternativen Schaltungsvorgang ermöglicht. Die Schaltungsanordnung 70 umfasst einen aus den Widerständen 71 und 72 gebildeten Spannungsteiler, der zwischen Masse und Betriebsspannung geschaltet ist.

Vorteilhaft ist dabei der Widerstand 71 als regelbarer Widerstand ausgebildet, um einen gewünschten Spannungsabgriff feinfühlig einstellen zu können. Der Schleiferanschluss des regelbaren Widerstands 71 liegt über einen Widerstand 73 an dem invertierenden Eingangsanschluss eines als Differenzverstärker geschalteten Operationsverstärkers 76. Der nicht-invertierende Eingangsanschluss des Operationsverstärkers 76ist über einen Widerstand 75 mit dem Masseanschluss verbunden. Weiterhin ist der nicht-invertierende Eingangsanschluss des Operationsverstärkers 76 über einen Widerstand 74 mit dem Energiespeicher 14 verbunden. Zwischen den Ausgangsanschluss des Operationsverstärkers und den invertierenden Eingangsanschluss ist ein Widerstand 77 geschaltet. Weiterhin ist der Ausgangsanschluss des Operationsverstärkers mit einem Schmitt-Trigger 78 verbunden, dessen Ausgang die Lampenschaltung steuert. Die Schaltschwelle für die Umschaltung wird durch den an dem Spannungsteiler 71,72 abgegriffenen Spannungswert festgelegt.

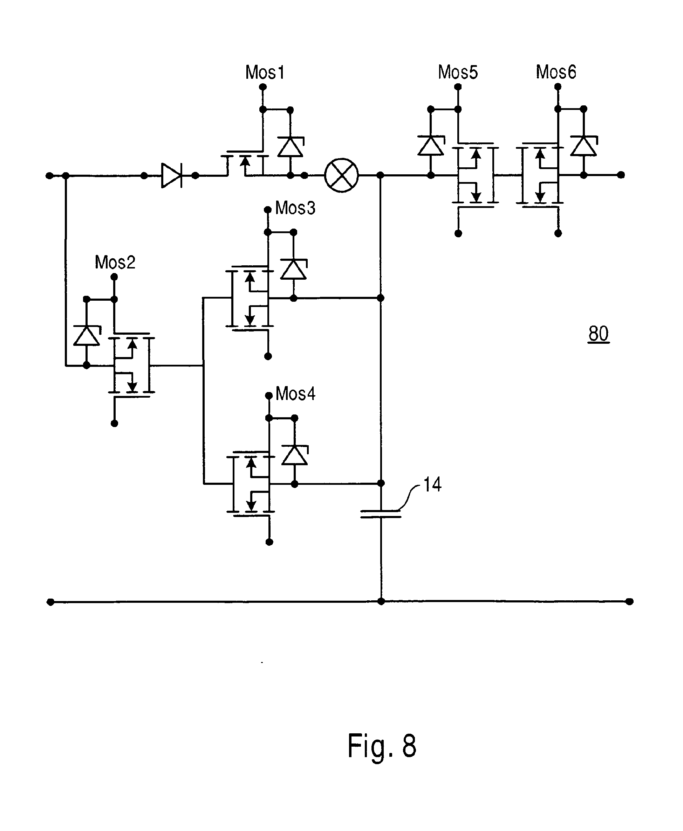

Die in Figur 8 dargestellte Schaltungsanordnung 80 zeigt Details der in Figur 2 lediglich als Blöcke wiedergegebenen Funktionsmodule 13.2 und 15. Die Schaltungsanordnung 80 umfasst mehrere N-Kanal Mosfet-Transistoren Mos1, Mos2, Mos3, Mos4, Mos5, Mos6. Derartige N-Kanal Mosfet-Transistoren umfassen, technologisch bedingt, eine Diode zwischen dem Sourceanschluss und dem Drainanschluss (Reversdiode). Diese Dioden sind in Figur 8 nicht dargestellt. Sie dienen, insbesondere bei dem Betrieb der Mosfet-Transistoren mit induktiven Lasten, als Schutz gegen auftretende Überspannung. Bei der in der Schaltungsanordnung 80 dargestellten Anwendung würden sich diese Dioden allerdings negativ auswirken. In unerwünschter Weise würde sich nämlich der Energiespeicher 14 über diese Dioden entladen, mit der Folge, dass die in ihm gespeicherte Energie nutzlos verloren ginge. Um das zu vermeiden, werden die Mosfet-Transistoren zweckmäßig in Gruppen, bzw. paarweise, antiseriell angeordnet. Beispielsweise bilden so die Mosfet-Transistoren Mos5 und Mos6, Mos2 und Mos3, bzw. Mos2 und Mos4 jeweils ein Paar derart antiseriell geschaltete Mosfet-Transistoren. Bei einer solchen Schaltung ist dann eine unerwünschte Entladung des Energiespeichers 14 nicht mehr möglich, da jeweils ein Paar von Mosfet-Transistoren sperrt. Der Mosfet-Transistor Mos3 dient zum schnellen Zuschalten des Energiespeichers 14 an das Teilsystem 11 bei dessen Ausfall. Der Mosfet-Transistor Mos4 ist für den Ladevorgang vorgesehen. Alle dargestellten Mosfet-Transistoren können, in einer vorteilhaften weiteren Ausgestaltung der Erfindung, wahlweise auch aus mehreren parallel geschalteten Mosfet-Transistoren bestehen, wodurch der maximal mögliche Stromfluss erhöht wird.

### Bezugszeichenliste

- 10: Energieversorgungssystem
- 10.1: Batterie
- 11: Teilsystem
- 12: Teilsystem
- 13: Funktionsmodul
- 13.1: Funktionsmodul
- 13.2: Funktionsmodul
- 13.3: Funktionsmodul
- 13.4: Funktionsmodul
- 13.5: Funktionsmodul
- 13.6: Funktionsmodul
- 14: Energiespeicher
- 15: Funktionsmodul
- 30: Diode
- 31: Diode
- 32: Diode
- 33: Spannungsregler
- 33.1: Eingangsanschluss
- 33.2: Ausgangsanschluss
- 33.3: Steuereingang
- 34: Widerstand
- 35: Kondensator
- 36: Widerstand
- 37: Kondensator
- 40: Widerstand
- 41: Widerstand
- 42: Kondensator
- 43: Zener-Diode
- 44: Operationsverstärker
- 50: Pufferschaltung
- 51: Eingangsanschluss
- 52: Ausgangsanschluss
- 53: Operationsverstärker
- 54: Widerstand
- 60: Operationsverstärker
- 61: Ausgangsanschluss
- 62: Widerstand
- 63: Widerstand
- 70: Schaltungsanordnung
- 71: Widerstand
- 72: Widerstand
- 73: Widerstand
- 74: Widerstand
- 75: Widerstand
- 76: Operationsverstärker
- 77: Widerstand
- 78: Schmitt-Trigger
- 80: Schaltungsanordnung
- Mos2: Mosfet-Transistor
- Mos3: Mosfet-Transistor
- Mos4: Mosfet-Transistor
- Mos5: Mosfet-Transistor
- Mos6: Mosfet-Transistor

## Patentansprüche

1. Energieversorgungssystem (10), das ein erstes Teilsystem (11) und ein zweites Teilsystem (12) und einen Energiespeicher (14) umfasst, wobei der Energiespeicher (14) über das erste Teilsystem (11) aufgeladen wird und bei Ausfall des ersten Teilsystems (11) das erste Teilsystem (11) und/oder das zweite Teilsystem (12) mit Energie versorgt, **dadurch gekennzeichnet, dass** für die Ladung des Energiespeichers (14) zwei alternativ schaltbare Ladezweige vorgesehen sind, deren jeweilige Aktivierung von der Spannungsdifferenz zwischen der Spannung des Bordnetzes und der Spannung an dem Energiespeicher (14) abhängig ist, wobei ein erster, für eine niedrige Spannungsdifferenz ausgelegter Ladezweig, über den der Energiespeicher (14) an das erste Teilsystem (11) bei dessen Ausfall zugeschaltet werden kann, paarweise antiseriell geschaltete Mosfet-Transistoren umfasst.

2. Energieversorgungssystem (10) nach Anspruch 1,
**gekennzeichnet durch** seine Verwendung in dem Bordnetz eines Kraftfahrzeugs.

3. Energieversorgungssystem nach einem der vorhergehenden Ansprüche, **dadurch gekennzeichnet, dass** der Energiespeicher (14) ein Doppelschichtkondensator ist.

4. Energieversorgungssystem nach einem der vorhergehenden Ansprüche, **dadurch gekennzeichnet, dass** es ein Funktionsmodul (13) für die Steuerung des Lade- bzw. Entladevorgangs des Energiespeichers (14) umfasst.

5. Energieversorgungssystem nach einem der vorhergehenden Ansprüche, **dadurch gekennzeichnet, dass** das Funktionsmodul (13) einen Mikrorechner (Funktionsmodul 13.6), eine Pufferschaltung (Funktionsmodul 13.5), eine Logikschaltung (Funktionsmodul 13.4), eine Treiberschaltung (13.3), ein Schaltmodul (Funktionsmodul 13.2), sowie eine Spannungsversorgungseinrichtung (Funktionsmodul 13.1) umfasst.

6. Energieversorgungssystem nach einem der vorhergehenden Ansprüche, **dadurch gekennzeichnet, dass** das Funktionsmodul (13.1) wenigstens eine von der Spannung des Bordnetzes abweichende Spannung, insbesondere eine unterhalb der Spannung des Bordnetzes liegende Spannung, bereitstellt.

7. Energieversorgungssystem nach einem der vorhergehenden Ansprüche, **dadurch gekennzeichnet, dass** das Funktionsmodul (13.1) einen Spannungsregler (33) umfasst, dessen Ausgangsspannung einstellbar ist.

8. Energieversorgungssystem nach einem der vorhergehenden Ansprüche, **dadurch gekennzeichnet, dass** das Funktionsmodul (13.5) einen als Impedanzwandler geschalteten Operationsverstärker (44) umfasst.

9. Energieversörgungssystem nach einem der vorhergehenden Ansprüche, **dadurch gekennzeichnet, dass** das Funktionsmodul (13.5) einen Tiefpass umfasst.

10. Energieversorgungssystem nach einem der vorhergehenden Ansprüche, **dadurch gekennzeichnet, dass** ein zweiter, für eine hohe Spannungsdifferenz ausgelegter Ladezweig eine Lampenschaltung umfasst.

11. Energieversorgungssystem nach einem der vorhergehenden Ansprüche, **dadurch gekennzeichnet, dass** mehrere Halbleiterschalter parallel geschaltet sind.

## Claims

1. Power supply system (10) comprising a first subsystem (11) and a second subsystem (12) and an energy store (14), wherein the energy store (14) is charged via the first subsystem (11) and, upon failure of the first subsystem (11), supplies the first subsystem (11) and/or the second subsystem (12) with energy, **characterized in that** two alternatively switchable charging branches are provided for the charging of the energy store (14), the respective activation of said charging branches being dependent on the voltage difference between the voltage of the on-board electrical system and the voltage across the energy store (14), wherein a first charging branch, which is designed for a low voltage difference and via which the energy store (14) can be connected to the first subsystem (11) upon the failure thereof, comprises MOSFET transistors that are reverse-connected in series in pairs.

2. Power supply system (10) according to Claim 1, **characterized by** its use in the on-board electrical system of a motor vehicle.

3. Power supply system according to any of the preceding claims, **characterized in that** the energy store (14) is a double-layer capacitor.

4. Power supply system according to any of the preceding claims, **characterized in that** it comprises a functional module (13) for controlling the charging and/or discharging operation of the energy store (14).

5. Power supply system according to any of the preceding claims, **characterized in that** the functional module (13) comprises a microcomputer (functional module 13.6), a buffer circuit (functional module 13.5), a logic circuit (functional module 13.4), a driver circuit (13.3), a switching module (functional module 13.2), and a voltage supply device (functional module 13.1).

6. Power supply system according to any of the preceding claims, **characterized in that** the functional module (13.1) provides at least one voltage that deviates from the voltage of the on-board electrical system, in particular a voltage that lies below the voltage of the on-board electrical system.

7. Power supply system according to any of the preceding claims, **characterized in that** the functional module (13.1) comprises a voltage regulator (33), the output voltage of which is adjustable.

8. Power supply system according to any of the preceding claims, **characterized in that** the functional module (13.5) comprises an operational amplifier (44) connected as an impedance converter.

9. Power supply system according to any of the preceding claims, **characterized in that** the functional module (13.5) comprises a low-pass filter.

10. Power supply system according to any of the preceding claims, **characterized in that** a second charging branch, which is designed for a high voltage difference, comprises a lamp circuit.

11. Power supply system according to any of the preceding claims, **characterized in that** a plurality of semiconductor switches are connected in parallel.

## Revendications

1. Système d'alimentation en énergie (10) comprenant un premier système partiel (11) et un deuxième système partiel (12) et un accumulateur d'énergie (14), l'accumulateur d'énergie (14) étant chargé par le biais du premier système partiel (11) et alimentant en énergie le premier système partiel (11) et/ou le deuxième système partiel (12) en cas de panne du premier système partiel (11), **caractérisé en ce que** deux branches de charge pouvant être commutées en alternance sont prévues pour la charge de l'accumulateur d'énergie (14), leur activation respective étant dépendante de la différence de tension entre la tension du réseau de bord et la tension aux bornes de l'accumulateur d'énergie (14), une première branche de charge, conçue pour une faible différence de tension et par le biais de laquelle l'accumulateur d'énergie (14) peut être connecté au premier système partiel (11) en cas de panne de celui-ci, comprenant des transistors MOSFET branchés en tête-bêche par paires.

2. Système d'alimentation en énergie (10) selon la revendication 1, **caractérisé par** son utilisation dans le réseau de bord d'un véhicule automobile.

3. Système d'alimentation en énergie (10) selon l'une des revendications précédentes, **caractérisé en ce que** l'accumulateur d'énergie (14) est un condensateur à double couche.

4. Système d'alimentation en énergie (10) selon l'une des revendications précédentes, **caractérisé en ce qu'**il comprend un module fonctionnel (13) pour commander l'opération de charge ou de décharge de l'accumulateur d'énergie (14).

5. Système d'alimentation en énergie (10) selon l'une des revendications précédentes, **caractérisé en ce que** le module fonctionnel (13) comprend un microcalculateur (module fonctionnel 13.6), un circuit tampon (module fonctionnel 13.5), un circuit logique (module fonctionnel 13.4), un circuit d'attaque (13.3), un module de commutation (module fonctionnel 13.2) ainsi qu'un dispositif d'alimentation électrique (module fonctionnel 13.1).

6. Système d'alimentation en énergie (10) selon l'une des revendications précédentes, **caractérisé en ce que** le module fonctionnel (13.1) délivre au moins une tension différente de la tension du réseau de bord, notamment une tension inférieure à la tension du réseau de bord.

7. Système d'alimentation en énergie (10) selon l'une des revendications précédentes, **caractérisé en ce que** le module fonctionnel (13.1) comprend un régulateur de tension (33) dont la tension de sortie est réglable.

8. Système d'alimentation en énergie (10) selon l'une des revendications précédentes, **caractérisé en ce que** le module fonctionnel (13.5) comprend un amplificateur opérationnel (44) branché en tant qu'adaptateur d'impédance.

9. Système d'alimentation en énergie (10) selon l'une des revendications précédentes, **caractérisé en ce que** le module fonctionnel (13.5) comprend un filtre passe-bas.

10. Système d'alimentation en énergie (10) selon l'une des revendications précédentes, **caractérisé en ce qu'**une deuxième branche de charge, conçue pour une différence de tension élevée, comprend un circuit à lampes.

11. Système d'alimentation en énergie (10) selon l'une des revendications précédentes, **caractérisé en ce que** plusieurs commutateurs à semiconducteur sont branchés en parallèle.
